# EUROPÄISCHE PATENTSCHRIFT

(11) **EP 1 682 952 B1**
(45) Veröffentlichungstag und Bekanntmachung des Hinweises auf die Patenterteilung: **24.03.2010**
(21) Anmeldenummer: 04797603.0
(22) Anmeldetag: 04.11.2004
(51) Int. Cl.: G05B 19/00

(54) **VERFAHREN ZUR WARTUNG VON FELDGERÄTEN DER PROZESSAUTOMATISIERUNGSTECHNIK MIT EINEM WARTUNGSRECHNER DES GERÄTEHERSTELLERS**
METHOD FOR MAINTAINING FIELD DEVICES USED FOR PROCESS AUTOMATION TECHNOLOGY BY MEANS OF A MAINTENANCE COMPUTER
PROCEDE POUR LA MAINTENANCE DE DISPOSITIFS DE TERRAIN UTILISES DANS LA TECHNIQUE D'AUTOMATISATION DES PROCESSUS A L'AIDE D'UN ORDINATEUR DE MAINTENANCE

(30) Priorität: 13.11.2003 DE 10353253
(43) Veröffentlichungstag der Anmeldung: 26.07.2006
(73) Patentinhaber: Endress + Hauser Process Solutions AG, 4153 Reinach BL (CH)
(72) Erfinder: DA SILVA NETO, Eugenio Ferreira, CH-4105 Biel-Benken (CH)
(74) Vertreter: Andres, Angelika Maria
(86) Internationale Anmeldenummer: PCT/EP2004/012477
(87) Internationale Veröffentlichungsnummer: WO 2005/047991

(56) Entgegenhaltungen:
- WO-A-03/014955
- WO-A-03/054645
- US-A1- 2003 033 414
- US-A1- 2003 112 823

## Beschreibung

Die Erfindung betrifft ein Verfahren zum Warten von Feldgeräten der Prozessautomatisierungstechnik mit einem Wartungsrechner des Geräteherstellers gemäß dem Oberbegriff des Anspruchs 1.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen sogenannte Aktoren, die als Ventile den Durchfluss einer Flüssigkeit in einem Rohrleitungsabschnitt oder als Pumpen den Füllstand in einem Behälter beeinflussen.

Eine Vielzahl solcher Feldgeräte wird von der Firma Endress + Hauser® hergestellt und vertrieben.

In der Regel sind Feldgeräte in modernen Fabrikationsanlagen über Feldbussysteme (Profibus®, Foundation®Fieldbus, etc.) mit übergeordneten Einheiten, z. Bsp. Leitsystemen oder Steuereinheiten verbunden. Diese dienen zur Prozesssteuerung, Prozessvisualisierung, Prozessüberwachung sowie zur Inbetriebnahme der Feldgeräte.

Meist sind Feldbussysteme auch in Unternehmensnetzwerke integriert. Damit kann aus unterschiedlichen Bereichen eines Unternehmens auf Prozessdaten bzw. Feldgeräteinformationen zugegriffen werden.

Die Firmennetzwerke können auch mit öffentlichen Netzwerken, z. B. dem Internet verbunden sein.

Die einwandfreie Funktion der Feldgeräte bzw. aller an das Feldbussystem angeschlossenen Einheiten ist von entscheidender Bedeutung für den sicheren Produktionsprozess in einem Unternehmen. Produktionsausfälle aufgrund fehlerhafte Feldgeräte können erhebliche Kosten verursachen.

Heutzutage erfolgt die Wartung von Feldgeräten meist durch Servicetechniker des Feldgeräteherstellers, der in regelmäßigen Abständen die Geräte inspiziert. Bei einer Fehlfunktion bzw. einem Totalausfall eines Feldgerätes bedeutet dies jedoch, daß ein zeitaufwendiger Kommunikationsprozess in Gang gesetzt wird. Der Gerätehersteller muß über das fehlerhafte Feldgerät informiert werden. Aufgrund der dem Hersteller vorliegenden Informationen wird entschieden, ob und wie eine Abhilfe möglich ist. Je nach dem kann der Kunde den Fehler selbst beheben oder ein Servicetechniker muß das fehlerhafte Feldgerät aufsuchen. Diese Maßnahmen sind in der Regel zeitaufwendig und dadurch kostenintensiv.

Wünschenswert wäre es deshalb, wenn eine Wartung eines kundenseitigen Feldgerätes vom Feldgerätehersteller aus über das Internet möglich wäre. Die Firmennetzwerke der Feldgerätehersteller sind nämlich normalerweise auch mit dem Internet verbunden.

Probleme bereiten hier jedoch die Firewall-Rechner, die die Firmennetzwerke gegen Zugriffe aus dem öffentlichen Netzwerk schützen. Firewall-Rechner erlauben in der Regel nur ausgehende Verbindungen vom lokalen Netzwerk ins Internet. Sie unterbinden jedoch aus Sicherheitsgründen externe Zugriffe vom Internet aus auf lokale Netzwerke.

Für die Wartung eines Feldgerätes ist jedoch ein Zugriff von einem entsprechenden Wartungsrechner auf das fehlerhafte Feldgerät über das Kundennetzwerk notwendig. Ein solcher Zugriff würde aber vom kundenseitigen Firewall-Rechner abgeblockt.

Die US 2003/0033414 A1 (D1) betrifft ein Verfahren und eine Anordnung zur Übertragung von Daten. Die Daten dienen dazu, ein System zu steuern und zu beobachten. Bei dem System handelt . ' es sich beispielsweise um eine speicherprogrammierbare Steuerung; um eine numerische Steuerung und/oder um Antriebe. Von dem zu überwachenden oder zu steuernden System wird eine Verbindungsanforderung zum Aufbau eines ersten Übertragungskanals an einen von dem System losgelösten Web Server abgeschickt Das System, auf das von einer entfernten Instanz zugegriffen wird, verfügt über einen Browser oder eine browserartige Software, welche auf den zentralen Web Server mittels eines http Kommandos zugreift. Der erste Übertragungskanal bleibt als Tunnel bestehen. Im Falle einer Verbindungsanforderung von einem Web Client an den Web Server wird ein zweiter Übertragungskanal zwischen dem Web Client und dem Web Server, z.B. einem Bedien- oder Beobachtungssystem, erstellt. Web Client und System sind jeweils über eine Firewall gesichert. Der Web Client nimmt über den als Tunnel zum bidirektionalen Senden und Empfangen von Nutzdaten dienenden ersten Übertragungskanal Kontakt mit dem System auf. Das in der D1 beschriebene Verfahren stellt somit eine Datenverbindung zur Verfügung, über die der Client als Bedien- und Beobachtungssystem und das zu beobachtende oder zu steuernde System miteinander kommunizieren können. Der Nachteil dieser Lösung ist darin zu sehen, dass die Datenverbindung permanent vorhanden sein muss, also auch dann wenn keine Nutzdaten vorhanden sind. Hierzu wird vorgeschlagen, dass in diesem Fall Scheindaten übertragen werden. Alternativ können zur Aufrechterhaltung einer permanenten Datenverbindung Informationen an den . Web Server gesendet werden, die diesem mitteilen, dass noch eine Übertragung von Nutzdaten beabsichtigt ist.

Aufgabe der Erfindung ist es deshalb, ein Verfahren zum Warten von Feldgeräten der Prozessautomatisierungstechnik mit einem Wartungsrechner des Geräteherstellers anzugeben, das einfach und kostengünstig durchführbar ist.

Gelöst wird diese Aufgabe durch das im Anspruch 1 angegebene Verfahren.

Vorteilhafte Weiterentwicklung der Erfindung sind in den Unteransprüchen angegeben.

Die wesentliche Idee der Erfindung besteht darin, daß im öffentlichen Netzwerk ein Verzeichnisserver-Rechner vorgesehen ist, bei dem sich eine Kundeneinheit und ein Wartungsrechner anmelden und der auf eine Kundenanfrage eine Sitzungsidentifikationsnummer vergibt und eine Netzwerkadresse eines mit dem öffentlichen Netzwerk verbundenen Relaisservers auswählt und an die Kundeneinheit und den Wartungsrechner weiterleitet. Über den Relaisserver ist mittels der Sitzungsidentifikationsnummer einer Peer-to-Peer-Verbindung zum Austausch von Feldgeräteinformationen zwischen der Kundeneinheit und dem Wartungsrechner möglich. Beide Kommunikationspartner erstellen eine ausgehende Verbindung zum Relaisserver, der quasi als Router dient und die entsprechenden Anfragen weiterleitet.
Da es sich bei beiden Kommunikationspartnern jeweils um ausgehende Verbindungen handelt, werden diese nicht vom den Firewall-Rechnern abgeblockt.

In einer Weiterentwicklung der Erfindung werden die Daten, die über die Peer-to-Peer-Verbindung übertragen werden, verschlüsselt.

Die Kundeneinheit kann gemäß Anspruch 3 ein Feldgerät, ein Gateway oder ein Leitsystem im Kundennetzwerk sein.

Gemäß Anspruch 4 erfolgt die Bedienung der Felgeräte von der Wartungseinheit aus über einen einfachen Befehlssatz.

In einer Weiterentwicklung der Erfindung ist es möglich, daß ein Feldgerät im Fehlerfall selbständig den Wartungsrechner über die Peer-to-Peer-Verbindung anruft.

Nachfolgend ist die Erfindung anhand eines in der Zeichnung dargestellten Ausführungsbeispiels näher erläutert.

Es zeigt:

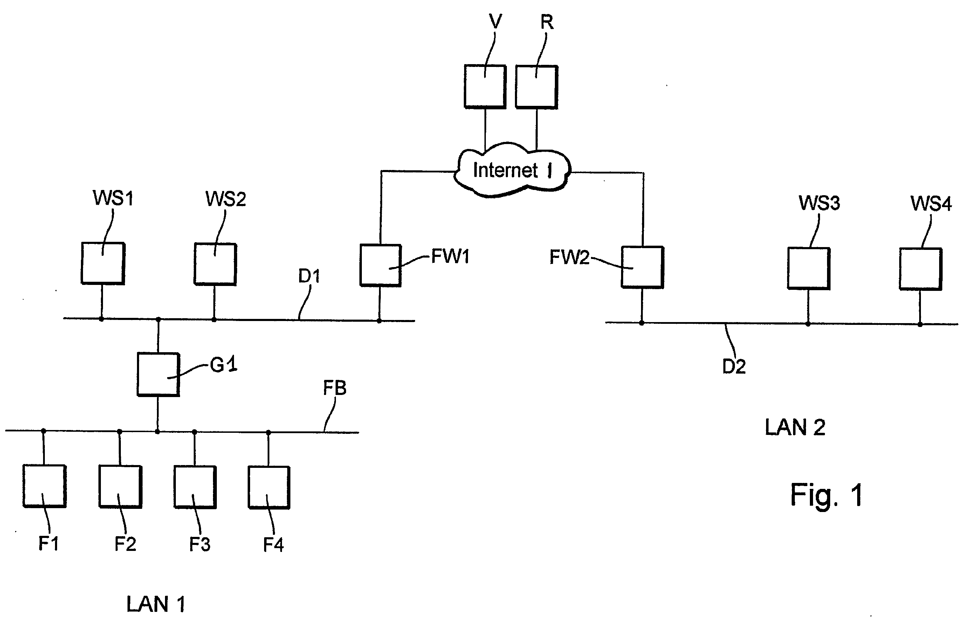

- Fig. 1:: Netzwerkverbindung zwischen einem Kundennetzwerk und einem lieferantenseitigen Firmennetzwerk in schematischer Darstellung.

In Fig. 1 ist ein Kundennetzwerk LAN1 dargestellt, das aus einem Datenbus D1 besteht, an den mehrere Arbeitsstationen WS1, WS2 angeschlossen sind, die als Leitsysteme bzw. Steuereinheiten dienen. Der Datenbus D1 arbeitet z. Bsp. nach dem Ethernetstandard. Über ein Gateway G1 ist der Datenbus D1 mit einem Feldbus FB verbunden. An den Feldbus FB sind mehrere Feldgeräte F1, F2, F3 und F4 angeschlossen, die als Sensoren bzw. Aktoren zur Prozesssteuerung dienen. Der Feldbus FB arbeitet z. B. nach dem Profibus® oder Foundation®Fieldbus-Standard.

Das Kundennetzwerk LAN1 ist über ein Firewall-Rechner FW1 mit einem öffentlichen Netzwerk (Internet) verbunden. Ebenfalls mit dem Internet ist ein herstellerseitiges Firmennetzwerk LAN2 über einen Firewall-Rechner FW2 verbunden. Die Datenübertragung im Firmennetzwerk LAN2 erfolgt über den Datenbus D2, der z. Bsp. ebenfalls nach dem Ethernetstandard arbeiten kann. Angeschlossen an den Datenbus D2 sind zwei weitere Arbeitsstationen WS3 und WS4. Die Arbeitsstationen WS3 und WS4 sind im Kundenservicebereich des Feldgeräteherstellers angeordnet. Weiterhin sind noch zwei zusätzliche Server, ein Relaisserver R und Verzeichnisserver V mit dem Internet verbunden.

Nachfolgend ist das erfindungsgemäße Verfahren näher erläutert.

Eine Kundeneinheit, z. B. die Arbeitsstation WS1 meldet sich beim Verzeichnisserver V über ein Anwendungsprogramm an. Die Internetadresse des Verzeichnisservers V wurde dem Kunden bereits vorher bekannt gemacht.

Ein oder mehrere Wartungsrechner auf Seiten des Feldgeräteherstellers, z. Bsp. die Arbeitsstationen WS3 und WS4, melden sich über eine Client-Anwendung ebenfalls beim Verzeichnisserver V an. Der Verzeichnisserver V übermittelt daraufhin der Kundeneinheit per Hyper-Link-eine Liste der angemeldeten Wartungsrechnern, z. B. WS3 und WS4. Aus dieser Liste kann der Kunde einen speziellen Wartungsrechner, z. B. die Arbeitsstation WS3 auswählen. Zusätzlich wählt der Verzeichnisserver einen Relaisserver R aus, über den der Datenaustausch erfolgen soll.

Der Verzeichnisserver V leitet anschließend die Sitzungsidentifikationsnummer und die Netzwerkadresse des Relaisservers R an die Kundeneinheit bzw. den Wartungsrechner WS3 weiter. Beide Kommunikationspartner, die Kundeneinheit KE und der Wartungsrechner WS3 melden sich beim Relaisserver R an. Mit Hilfe des Relaisservers R und der Sitzungsidentifikationsnummer (Session ID) die beiden Kommunikationspartnern vom Verzeichnisserver V bekannt gemacht wurde, ist nun eine Peer-to-Peer-Verbindung zwischen den beiden Kommunikationspartnern möglich. Vom Wartungsrechner WS3 aus kann so in einfacher Weise auf Feldgeräteinformationen zugegriffen werden. Um den Datenaustausch zwischen den beiden Kommunikationspartnern vor unberechtigten Zugriffen zu schützen, werden die Daten verschlüsselt übertragen. Ein entsprechender Schlüssel kann dem Kunden bei der Auslieferung eines Feldgerätes bekannt gemacht werden.

Bei der Kunden-Einheit kann es sich z. Bsp. auch um ein Feldgerät, z. B. das Feldgerät F2 handeln. In diesem Fall besteht eine direkte Verbindung zwischen dem Wartungsrechner WS3 und dem Feldgerät F2. Über einen einfachen Befehlssatz (Mnemonics) können Parameter aus dem Feldgerät F2 ausgelesen bzw. gesetzt werden. STS für Status des Feldgerätes, WRPR "Parameter Name, Parameterwert" zum Ändern eines Parameters und RDPR "Parameter Name" zum Lesen eines Parameters. Mit Hilfe des erfindungsgemäßen Verfahrens stehen dem Servicepersonal in der Serviceabteilung des Feldgeräteherstellers alle notwendigen Feldgeräteinformationen zur Verfügung, die für eine effiziente Wartung benötigt werden. Somit können Fehlfunktionen in Feldgeräten über eine Verbindung zum Feldgerätehersteller leicht behoben werden.

Denkbar ist es auch, daß ein Feldgerät z. B. F1 den Wartungsrechner WS3 von sich aus anruft, wenn Fehlfunktionen auftreten. In diesem Fall kann eigentlich die Kommunikation nur mit einem fest vorgegebener Wartungsrechner z. B. WS3 erfolgen, da anderenfalls das Feldgerät F1 einen bestimmten Wartungsrechner auswählen müsste.

Neben Diagnoseinformationen, Statusinformationen etc. können über die Peer-to-Peer-Verbindung auch Software Updates an das Feldgerät F1 übertragen werden.

Die Client-Anwendung auf dem Wartungsrechner z. B. WS3 weist mehrer Plug-ins wie z.B. Chat-Modul, Version-Information, File Upload, E+H Software Update, Remote Assistance, Remote Access to OPC-Server mit jeweiligen graphischen Anwenderschnittstellen GUI auf. Diese Plug-ins dienen zur Ausführung der entsprechenden Aufgaben Versions-Information aus dem Feldgerät F1 auslesen, Download und Upload von Dateien, Software-Updates für das Feldgerät F1, Fernwartung bzw. Fernzugriff auf einen kundenseitigen OPC-Server.

## Patentansprüche

1. Verfahren zum Warten von Feldgeräten (F1 bis F4) der Prozessautomatisierungstechnik mit einem Wartungsrechner (WS3, WS4) des Gerätehersteller, der im Firmennetzwerk (LAN2 Intranet) des Feldgeräteherstellers angeordnet ist und der mit mindestens einem Feldgerät über das Firmennetzwerk (LAN2), ein öffentliches Netzwerk (Internet I) und ein Kundennetzwerk (LAN1 Intranet) verbunden ist, wobei das herstellerseitige und das kundenseitige Netzwerk jeweils durch Firewall-Rechner (FW1, FW2) gegenüber dem öffentlichen Netzwerk (Internet I) abgesichert sind, **dadurch gekennzeichnet, dass** im öffentlichen Netzwerk (Internet I) ein Verzeichnisserver-Rechner (V) vorgesehen ist, bei dem sich eine Kunden-Einheit (WS1, WS2) und der Wartungsrechner (WS3, WS4) anmelden und der auf eine Kundenanfrage eine Sitzungsidentifikationsnummer vergibt und eine Netzwerkadresse eines mit dem öffentlichen Netzwerk (Internet I) verbundenen Relais-Servers (R) auswählt und an die Kunden-Einheit (WS1, WS2) und Wartungsrechner (WS3, WS4) weiterleitet, wobei über den Relais-Server (R) mittels der Sitzungsidentifikationsnummer eine Peer-to-Peer-Verbindung zum Austausch von Feldgeräteinformationen zwischen die Kunden-Einheit (WS1, WS2) und dem Wartungsrechner (WS3, WS4) ermöglicht wird.

2. Verfahren nach Anspruch 1, **dadurch gekennzeichnet, dass** die Daten verschlüsselt über die Peer-to-Peer-Verbindung übertragen werden.

3. Verfahren nach Anspruch 1 oder 2, **dadurch gekennzeichnet, dass** die Kunden-Einheit in ein Feldgerät (F1, F2, F3, F4), ein Gateway (G1) oder eine Steuereinheit (WS1, WS2) im Kundennetzwerk (LAN1) ist.

4. Verfahren nach einem der vorhergehenden Ansprüche, **dadurch gekennzeichnet, daß** von der Wartungseinheit (WS1, WS2) eine Bedienung der Feldgeräte (F1, F2, F3, F4) möglich ist.

5. Verfahren nach einem der vorhergehenden Ansprüche, **dadurch gekennzeichnet, daß** ein Feldgerät (F1, F2, F3, F4) im Fehlerfall selbständig den Wartungsrechner (WS3, WS4) anruft.

## Claims

1. Method for servicing field devices (F1 to F4) used in process automation with a service computer (WS3, WS4) of the device manufacturer which is arranged in the company network (LAN2 intranet) of the field device manufacturer and which is connected to at least one field device via the company network (LAN2), a public network (Internet 1) and a customer network (LAN1 intranet), whereby the manufacturer network and the customer network are secured against the public network (Internet 1) by a firewall computer (FW1, FW2), **characterized in that** a directory server computer (V) is provided in the public network (Internet 1) and a customer unit (WS1, WS2) and the service computer (WS3, WS4) log onto the directory server computer. In the event of a customer request, said directory server computer issues a session ID and selects a network address of a relay server (R) that is connected to the public network (Internet 1) and forwards it to the customer unit (WS1, WS2) and service computer (WS3, WS4), whereby a peer-to-peer connection is facilitated via the relay server (R) using the session ID number, said connection being used to exchange field device information between the customer unit (WS1, WS2) and the service computer (WS3, WS4).

2. Method as per Claim 1, **characterized in that** the data are encrypted when transmitted via the peer-to-peer connection.

3. Method as per Claim 1 or 2, **characterized in that** the customer unit is a field device (F1, F2, F3, F4), a gateway (G1) or a control unit (WS1, WS2) in the customer network (LAN1).

4. Method as per one of the previous claims, **characterized in that** it is possible to operate the field devices (F1, F2, F3, F4) from the service unit (WS1, WS2).

5. Method as per one of the previous claims, **characterized in that** a field device (F1, F2, F3, F4) calls the service computer (WS3, WS4) automatically in the event of an error.

## Revendications

1. Procédé destiné à la maintenance d'appareils de terrain (F1 à F4) de la technique d'automatisation de process, avec un ordinateur de maintenance (WS3, WS4) du fabricant d'appareils, qui est configuré dans le réseau d'entreprise (LAN2 Intranet) du fabricant d'appareils de terrain, et qui est relié avec au moins un appareil de terrain par l'intermédiaire du réseau d'entreprise (LAN2) à un réseau public (Internet I) et un réseau client (LAN1 Intranet), le réseau côté fabricant et le réseau côté client étant respectivement sécurisés par un ordinateur pare-feu (FW1, FW2) par rapport au réseau public (Internet I), **caractérisé en ce qu'**est prévu dans le réseau public (Internet I) un ordinateur serveur de répertoires (V), auquel une unité client (WS1, WS2) et l'ordinateur de maintenance (WS3, WS4) se connectent, et qui attribue un numéro d'identification de session à une demande du client et sélectionne une adresse réseau d'un serveur relais (R) relié au réseau public (Internet I) et la transmet à l'unité client (WS1, WS2) et à l'ordinateur de maintenance (WS3, WS4), le serveur relais (R) permettant, au moyen du numéro d'identification de session, une liaison pair à pair pour l'échange d'informations d'appareils de terrain entre l'unité client (WS1, WS2) et l'ordinateur de maintenance (WS3, WS4).

2. Procédé selon la revendication 1, **caractérisé en ce que** les données sont transmises de façon cryptée par l'intermédiaire de la liaison pair à pair.

3. Procédé selon la revendication 1 ou 2, **caractérisé en ce que** l'unité client dans un appareil de terrain (F1, F2, F3, F4) est une passerelle (G1) ou une unité de commande (WS1, WS2) au sein du réseau client (LAN1).

4. Procédé selon l'une des revendications précédentes, **caractérisé en ce qu'**une utilisation des appareils de terrain (F1, F2, F3, F4) est possible depuis l'unité de maintenance (WS1, WS2).

5. Procédé selon l'une des revendications précédentes, **caractérisé en ce qu'**un appareil de terrain (F1, F2, F3, F4) appelle, en cas d'erreur, automatiquement l'ordinateur de maintenance (WS3, WS4).
